# EUROPÄISCHE PATENTSCHRIFT

(11) **EP 2 823 933 B1**
(45) Veröffentlichungstag und Bekanntmachung des Hinweises auf die Patenterteilung: **14.09.2016**
(21) Anmeldenummer: 13003488.7
(22) Anmeldetag: 10.07.2013
(51) Int. Cl.: B23Q 3/155

(54) **Werkzeugspeicheranordnung zur Erweiterung der Werkzeugspeicherkapazität eines Fräs-Bohr-und/oder Dreh-Bearbeitungszentrums**
Tool storage arrangement for extending the tool storage capacity of a milling, drilling and/or turning centre
Agencement de stockage d'outils pour l'extension de la capacité de stockage d'outils d'un centre d'usinage par forage, fraisage et/ou tournage

(43) Veröffentlichungstag der Anmeldung: 14.01.2015
(73) Patentinhaber: Maschinenfabrik Berthold Hermle AG, 78559 Gosheim (DE)
(72) Erfinder: Bernhard, Franz-Xaver, 78549 Spaichingen (DE); Schwörer, Tobias, 78598 Königsheim (DE); Uttenweiler, Dieter, 72359 Dotternhausen (DE)
(74) Vertreter: Hoefer & Partner Patentanwälte mbB

(56) Entgegenhaltungen:
- EP-A1- 1 604 775
- DE-A1- 2 060 957
- DE-A1- 3 816 861
- DE-A1-102009 025 099
- DE-U1-202011 001 493

## Beschreibung

Die Erfindung betrifft eine Werkzeugspeicheranordnung zur Erweiterung der Werkzeugspeicherkapazität eines vertikalen oder eines horizontalen Fräs-, Bohr- und/oder Dreh-Bearbeitungszentrums, bestehend aus mehreren separaten, funktional miteinander verketteten Speichereinheiten, in denen sich jeweils eine eigene kraftbetriebene Werkzeughandhabungseinrichtung befindet und in denen mindestens ein Werkzeugmagazinregal mit einer Vielzahl von nicht beweglichen Werkzeugablageplätzen zur Speicherung von Bearbeitungswerkzeugen untergebracht ist.

Eine derartige Werkzeugspeicheranordnung ist aus der EP 1 604 775 A1 bekannt.

Unter dem Begriff - vertikales oder horizontales Bearbeitungszentrum - wird im Sinne der vorliegenden Erfindung ein Bearbeitungszentrum verstanden, bei dem die Werkstückbearbeitung durch eine vertikal oder horizontal ausgerichtete Werkzeugspindel durchgeführt wird.

Unter dem Begriff - separate Speichereinheiten - werden im Sinne der vorliegenden Erfindung eigenständige Baugruppen verstanden, die ein oder mehrere Werkzeugmagazinregale enthalten, in denen eine eigene Werkzeughandhabungseinrichtung integriert ist und die alle weiteren zur Adaption notwendigen und nach dem normativen Stand der Technik erforderlichen Komponenten enthalten (z. B. Schutzumhausung). Ferner wird solch eine Speichereinheit als separat bezeichnet, weil sie dafür vorgesehen ist, für bestimmte Zwecke (z. B. Transport, Umstrukturierung) sowohl von weiteren Speichereinheiten, als auch vom Bearbeitungszentrum separiert zu werden. Im Ausführungsbeispiel ist solch eine Separierung eindeutig daran zu erkennen, dass das Bearbeitungszentrum und jede Speichereinheit auf eigenen Grundgestellen errichtet sind.

Unter dem Begriff - funktional verkettete Speichereinheiten - wird im Sinne der vorliegenden Erfindung der Zusammenschluss mehrerer separater Speichereinheiten verstanden, welche für den gleichen Zweck bestimmt sind und somit die gleiche Funktion erfüllen. Dadurch entsteht ein Gesamtsystem, das aus funktioneller Hinsicht wie eine einzige größere Speichereinheit wirkt.

Bei Bearbeitungszentren wird die Werkzeugspeicherkapazität von Bearbeitungswerkzeugen in der Regel durch die Abmessungen und Platzverhältnisse des Bearbeitungszentrums bestimmt. Daher werden in Abhängigkeit der Kundenapplikationen oft zusätzliche Speichereinheiten eingesetzt, um die Werkzeugspeicherkapazität zu vergrößern. Solche zusätzlichen Speichereinheiten übergeben die dort gelagerten Bearbeitungswerkzeuge z. B. an den maschinenintegrierten Werkzeugmagazinspeicher oder die maschinenintegrierte Werkzeugwechselvorrichtung und sind in unterschiedlichsten Ausführungen und äußeren Abmessungen bekannt. Die erforderliche Werkzeugspeicherkapazität eines Bearbeitungszentrums bzw. der zusätzlichen Speichereinheit ist dabei stark kunden- und branchenabhängig. Um auf kleiner Aufstellfläche die Werkzeugspeicherkapazität größtmöglich zu erweitern, eignen sich Speichereinheiten mit mehreren Ablageebenen besonders gut. Jedoch sind gleichermaßen solche Speichereinheiten mit nur einer vertikalen Ablageebene hinlänglich nach dem Stand der Technik bekannt und am Markt vertreten. Damit im Serienmaschinenbau möglichst wirtschaftlich produziert werden kann, gilt es ein möglichst universell anwendbares Lösungsprinzip zu schaffen, damit mit der angebotenen Produktpalette ein möglichst großes Anwendungsspektrum abgedeckt und somit für unterschiedlichste Anwendungen ein passendes System bereitgestellt werden kann. Eine wichtige Grundlage zur Umsetzung eines solchen Lösungsprinzips bildet die im Maschinenbau sehr bedeutsame Gleichteilestrategie.

Aus der EP 1 604 775 A1 ist eine Speicheranordnung bekannt, die aus einer turmförmigen Speichereinheit mit mehreren Ablageebenen und einer Vielzahl von kreisringförmig angeordneten, nicht beweglichen Werkzeugablageplätzen besteht. Im Kreismittelpunkt ist eine linear in vertikaler und horizontaler Richtung verfahrbare Werkzeughandhabungseinrichtung drehbar gelagert angebracht. Die Werkzeughandhabungseinrichtung ermöglicht den Austausch von Bearbeitungswerkzeugen mit der Werkzeugwechselvorrichtung des Bearbeitungszentrums. Dabei wird darauf hingewiesen, dass die Modularität des Systems eine beliebige Erweiterung der Werkzeugspeicherkapazität in der Höhe zulässt und auch die mindestens fünf Achtel eines Kreises umfassenden Lagertablare eine Erweiterung auf bis zu sieben Achtel zulassen. Außerdem wird erwähnt, dass es auch denkbar wäre, eine zweite Speichereinheit spiegelbildlich zur ersten an das gleiche Bearbeitungszentrum anzubinden. Ferner wird beschrieben, dass mehrere der aufgezeigten Speichereinheiten an mehreren Bearbeitungszentren über eine Krananlage, über die Dachpartie der Speicheranlagen miteinander verkettet werden können. Die Werkzeugspeicherkapazität auf eine der zuvor dargelegten Weise zu erweitern, bringt aber einige Nachteile mit sich. Die Erweiterung der Speicherkapazität durch zusätzliche Regalsegmente auf einem Lagertablar ist auf sieben Achtel beschränkt. Weiterhin ist die Vergrößerung der Speichereinheit in deren Höhe in vielen Betriebshallen nur innerhalb enger Grenzen möglich, weil eine begrenzte Deckenhöhe vorgegeben ist oder der Verfahrbereich eines Deckenkrans nicht beeinträchtigt werden darf. Außerdem muss dabei der Verfahrbereich der vertikalen Hubachse aufwendig verlängert werden. Bei der Anbindung einer zweiten Speichereinheit an das gleiche Bearbeitungszentrum, muss das Bearbeitungszentrum eine zweite Übergabestelle für den Austausch der Bearbeitungswerkzeuge zwischen der zweiten Speichereinheit und dem Bearbeitungszentrum aufweisen. Dies stellt eine aufwendige Modifikation des Bearbeitungszentrums und des darin integrierten Werkzeugwechselsystems dar. Ebenso ist die Verkettung mehrerer Speichereinheiten durch eine übergeordnete Krananlage konstruktiv sehr aufwendig und dadurch sehr kostenintensiv. Außerdem müssen alle Speichereinheiten auf einer geraden Linie angeordnet werden, um diese mit einer linearen Krananlage zu verketten, was sich bezüglich der Aufstellanordnung der Gesamtanlage bei einer Verkettung von mehr als zwei Speichereinheiten nachteilig auswirken kann.

Ausgehend vom Stand der Technik liegt der vorliegenden Erfindung die Aufgabe zugrunde, eine möglichst einfache und kostengünstige funktionale Verkettung von mehreren separaten Speichereinheiten zu schaffen, die sowohl eine modulare Kapazitätserweiterungsmöglichkeit einer bestehenden Speichereinheit und des dazugehörigen Bearbeitungszentrums erzielen, als auch, unter Berücksichtigung der relevanten wirtschaftlichen Aspekte, die Nachteile und Probleme aus dem bekannten Stand der Technik verbessern soll.

Diese erfindungsgemäße Aufgabe wird mit einer Werkzeugspeicheranordnung nach Anspruch 1 gelöst.

Die Erfindung verbessert den bekannten Stand der Technik dahingehend, dass es erstmalig möglich ist, mehrere separate Speichereinheiten innerhalb einer Werkzeugspeicheranordnung auf einfachste Weise derart funktional miteinander zu verketten, dass anstelle einer komplexen, mehrachsigen Handhabungseinrichtung eine einfach aufgebaute Übergabestation ausreicht. Somit wird es auf wirtschaftlich sinnvolle Weise möglich, die Werkzeugspeicherkapazität einer abgeschlossenen Speichereinheit zu erhöhen, ohne diese Speichereinheit in Ihrer Bauform und Außenmaßen bedeutend zu verändern. Die im Maschinenbau aus ökonomischer Sicht sehr wichtige Gleichteilestrategie wird daher durch die Verkettung mehrerer Speichereinheiten und speziell durch die vorliegende Erfindung unterstützt. Wie aus den nachfolgenden vorteilhaften Weiterbildungen hervorgeht, besteht sogar die Möglichkeit die Be- und Entladestation und die Übergabestation gleichartig auszuführen und auch hierbei die Gleichteilestrategie auszunutzen. Durch eine Verkettung der Speichereinheiten ergibt sich außerdem die Möglichkeit, die Geometrie einer Werkzeugspeicheranordnung trotz der sehr großen Werkzeugspeicherkapazität flexibel an die Aufstellfläche der Betreiberhalle anzupassen, indem die Übergabestation und/oder die Be- und Entladestation modular an verschiedenen Stellen der Speichereinheiten angebracht werden können. Die vorliegende Erfindung lässt es sogar zu, dass auf kostengünstige Weise die Speichereinheiten von mehreren Bearbeitungszentren miteinander verkettet werden, um eine zentrale Werkzeugspeicheranordnung, aus der mehrere Maschinen mit Werkzeugen versorgt werden können, zu errichten.

So hat sich bei der vorliegenden Erfindung herausgestellt, dass es aus ökonomischer Sicht unter bestimmten Gegebenheiten vorteilhafter ist, eine vergrößerte Werkzeugspeicherkapazität durch mehrere funktional miteinander verkettete Speichereinheiten, anstatt durch eine einzige größere Speichereinheit zu erzielen. Solche Gegebenheiten können z. B. sein, dass die größere Speichereinheit eine aufwendige Neuentwicklung darstellt, für die nur ein geringer Absatz zu erwarten ist, während die zu verkettenden einzelnen Speichereinheiten bereits in großer Stückzahl produziert werden. Dies ist unabhängig davon, ob die zu verkettenden einzelnen Speichereinheiten von gleichartigem oder unterschiedlichem Aufbau sind.

Die Unteransprüche haben vorteilhafte Weiterbildungen der Erfindung zum Inhalt.

Gemäß einer bevorzugten Weiterbildung sind die räumlich miteinander verbundenen Speichereinheiten gleichartig aufgebaut.

Gemäß einer bevorzugten Weiterbildung ist mindestens eine der Speichereinheiten an einen Pick-Up Werkzeugmagazinspeicher des Bearbeitungszentrums adaptierbar, um Bearbeitungswerkzeuge auszutauschen.

Gemäß einer bevorzugten Weiterbildung beinhalten die Speichereinheiten kreisringförmige Werkzeugmagazinregale mit einer Vielzahl von übereinander und kreisringförmig angeordneten, nicht beweglichen Werkzeugablageplätzen.

Gemäß einer bevorzugten Weiterbildung ist in jedem Werkzeugmagazinregal eine im freien kreisringförmigen Zwischenraum um eine vertikale Drehachse motorisch bewegbare Werkzeughandhabungseinrichtung angeordnet.

Gemäß einer bevorzugten Weiterbildung ist an jeder Werkzeughandhabungseinrichtung ein horizontal und vertikal motorisch verfahrbarer Werkzeuggreifer für die Aufnahme und Abgabe der Bearbeitungswerkzeuge angeordnet.

Gemäß einer bevorzugten Weiterbildung ist die Übergabestation modular an verschiedenen Stellen der Speichereinheiten anbringbar, damit die räumliche Anordnung der funktional miteinander verketten Speichereinheiten an die Platzverhältnisse beim Anlagenbetreiber anpassbar ist.

Gemäß einer bevorzugten Weiterbildung enthält die Übergabestation eine eigene kraftbetriebene Vorrichtung, die die Bearbeitungswerkzeuge in der Übergabestation von einer Speichereinheit an die andere Speichereinheit derart übergibt, dass die Bearbeitungswerkzeuge sofort durch die Werkzeughandhabungseinrichtung weiter transportiert werden können und nicht zuerst in ihrer winkelgemäßen bzw. radialen Orientierung gedreht werden müssen.

Gemäß einer bevorzugten Weiterbildung ist die kraftbetriebene Vorrichtung eine um eine vertikale Drehachse motorisch drehbare Werkzeugschleuse mit einseitig oder beidseitig angeordneten, nicht beweglichen Werkzeugablageplätzen, die durch die Drehbewegung die in der Werkzeugschleuse befindlichen Bearbeitungswerkzeuge aus dem Innenraum einer Speichereinheit in den Innenraum der anderen damit verbundenen Speichereinheit einschleust.

Gemäß einer bevorzugten Weiterbildung ist die Werkzeugschleuse in identischer Bauweise zusätzlich an mindestens einer der Speichereinheiten als Be- und Entladestation zur manuellen Be- und Entladung von Bearbeitungswerkzeugen anbringbar.

Gemäß einer bevorzugten Weiterbildung sind eine oder mehrere Be- und Entladestationen modular an verschiedenen Stellen der Speichereinheiten anbringbar, damit die räumliche Anordnung der Be- und Entladestationen an die Platzverhältnisse beim Anlagenbetreiber angepasst werden kann.

Gemäß einer bevorzugten Weiterbildung haben die miteinander verketteten Speichereinheiten die Funktion einer zentralen Werkzeugspeicheranordnung, um die Speicherkapazität mehrerer Bearbeitungszentren zu erweitern, indem mehrere der funktional verketteten Speichereinheiten dazu ausgebildet sind, die Bearbeitungswerkzeuge mit jeweils einem Bearbeitungszentrum auszutauschen.

Unter dem Begriff - räumlich miteinander verbunden - wird im Sinne der Erfindung eine Durchgangsmöglichkeit von dem Innenraum der einen Speichereinheit in den Innenraum der damit verbundenen anderen Speichereinheit verstanden. Es muss dazu allerdings keine permanente Durchgriffsöffnung bestehen, sondern diese räumliche Verbindung kann z. B. außerhalb der Werkzeugwechselvorgänge durchaus geschlossen werden.

Unter dem Begriff - gleichartige Speichereinheiten - werden im Sinne der vorliegenden Erfindung solche Speichereinheiten verstanden, die in Ihrem Aufbau ähnlich sind und daher einen großen Teil von konstruktiv gleichen Komponenten enthalten, um die Vorteile der Gleichteilestrategie ausnutzen zu können.

Unter dem Begriff - Pick-Up-Werkzeugmagazinspeicher - wird im Sinne der vorliegenden Erfindung ein Werkzeugmagazinspeicher innerhalb des Bearbeitungszentrums verstanden, der für einen Werkzeugwechsel im Pick-Up Verfahren geeignet ist. Beim sogenannten Werkzeugwechsel im Pick-Up-Verfahren, werden die Bearbeitungswerkzeuge von der vertikal oder horizontal ausgerichteten Werkzeugspindel ohne Zuhilfenahme einer externen Werkzeugwechselvorrichtung direkt aus dem Pick-Up-Werkzeugmagazinspeicher entnommen und nach dem Gebrauch wieder in diesem abgelegt.

Unter dem Begriff - zentrale Werkzeugspeicheranordnung - wird im Sinne der vorliegenden Erfindung eine Speicheranordnung verstanden, die eine Vielzahl von Bearbeitungswerkzeugen aufnehmen und diese nach dem anwendungsbezogenen Bedarf für mehrere Bearbeitungszentren bereitstellen kann. Dadurch wird die Werkzeugspeicherkapazität der einzelnen Bearbeitungszentren vergrößert, und zudem können einzelne Bearbeitungswerkzeuge ohne manuelles Eingreifen zeitversetzt in mehreren verschiedenen Bearbeitungszentren verwendet werden, was eine kostengünstigere Lagerhaltung der Bearbeitungswerkzeuge ermöglicht.

Weitere Einzelheiten, Merkmale und Vorteile der Erfindung ergeben sich aus nachfolgender Beschreibung anhand der Zeichnungen. Es zeigen:
- Figur 1: eine Draufsicht auf ein Bearbeitungszentrum mit einer erfindungsgemäß ausgebildeten Werkzeugspeicheranordnung,
- Figur 2: eine vergrößerte Darstellung der erfindungsgemäßen Werkzeugspeicheranordnung,
- Figur 3: eine Ansicht einer im Zusammenhang mit der erfindungsgemäß ausgebildeten Werkzeugspeicheranordnung verwendeten Speichereinheit,

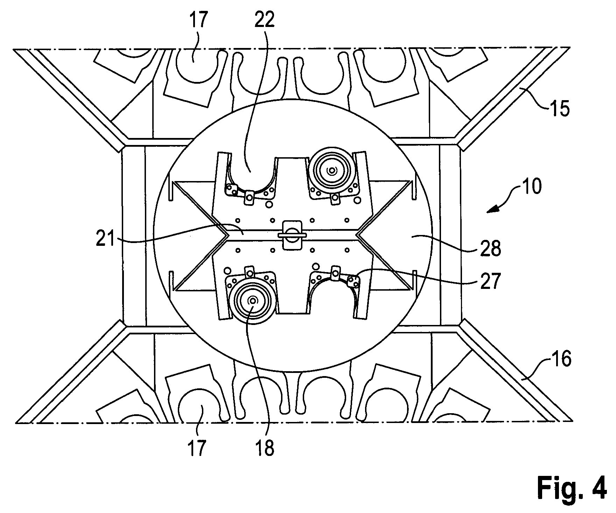

- Figur 4: eine vergrößerte Darstellung einer im Zusammenhang mit der erfindungsgemäß ausgebildeten Werkzeugspeicheranordnung verwendeten Übergabestation,
- Figur 5: eine Draufsicht auf ein Bearbeitungszentrum mit einer erfindungsgemäß ausgebildeten Werkzeugspeicheranordnung nach einer zweiten Ausführungsform, und
- Figur 6: eine Draufsicht auf ein Bearbeitungszentrum mit einer erfindungsgemäß ausgebildeten Werkzeugspeicheranordnung nach einer dritten Ausführungsform.

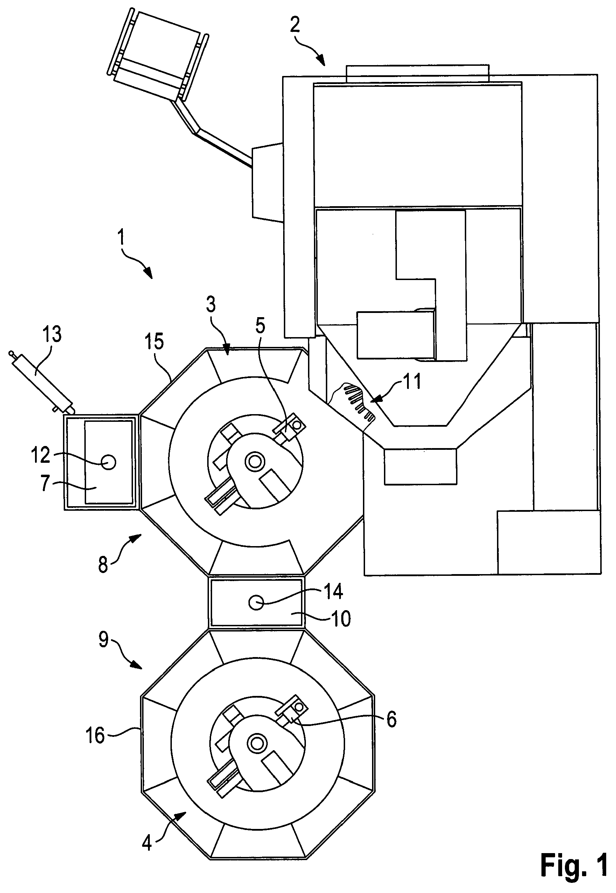

In Figur 1 ist eine Werkzeugspeicheranordnung 1 zur Erweiterung der Werkzeugspeicherkapazität eines vertikalen oder eines horizontalen Fräs-, Bohr und/oder Dreh-Bearbeitungszentrums 2 gezeigt.

Die Werkzeugspeicheranordnung 1 besitzt im vorliegenden Ausführungsbeispiel zwei gleichartig aufgebaute Speichereinheiten 8, 9, die jeweils ein kreisringförmiges Werkzeugmagazinregal 3, 4 und eine Werkzeughandhabungsvorrichtung 5, 6 aufweisen. An einer der Speichereinheiten 8, 9 - vorliegend an der Speichereinheit 8 - ist eine Be- und Entladestation 7 angeordnet, mit deren Hilfe die Speichereinheiten 8, 9 bestückt werden können.

Die beiden Speichereinheiten 8, 9 sind mittels einer Übergabestation 10 miteinander verbunden, die sich zwischen den Speichereinheiten 8, 9 befindet. Die Übergabestation 10 kann modular an verschiedenen Stellen der Speichereinheiten 8, 9 angebracht werden, damit die räumliche Anordnung der funktional miteinander verketteten Speichereinheiten 8, 9 an die Platzverhältnisse beim jeweiligen Anlagenbetreiber anpassbar ist.

Das Bearbeitungszentrum 2 weist ein im Wesentlichen U-förmiges Maschinengestell mit zwei Seitenwandungen auf, zwischen denen ein bewegbarer Pick-Up-Werkzeugmagazinspeicher 11 für einen Werkzeugwechsel im Pick-Up-Verfahren gelagert ist. Mindestens eine der Speichereinheiten 8, 9 kann mit diesem Pick-Up-Werkzeugmagazinspeicher 11 verbunden werden, um Bearbeitungswerkzeuge 18 zwischen der Speichereinheit 8 und dem Pick-Up-Werkzeugmagazinspeicher 11 auszutauschen.

Die Be- und Entladestation 7 weist einen Antriebsmotor 12 sowie ein Bedienfeld 13 auf. Des Weiteren weist auch die Übergabestation 10 einen Antriebsmotor 14 auf, der die Bearbeitungswerkzeuge 18 in der Übergabestation 10 von einer Speichereinheit 8, 9 an die andere Speichereinheit 8, 9 derart übergibt, dass die Bearbeitungswerkzeuge 18 sofort durch die Werkzeughandhabungseinrichtung 5, 6 weiter transportiert werden können und nicht zuerst in ihrer winkelgemäßen bzw. radialen Orientierung gedreht werden müssen.

Jede der Speichereinheiten 8, 9 ist von einer Schutzumhausung 15, 16 umgeben.

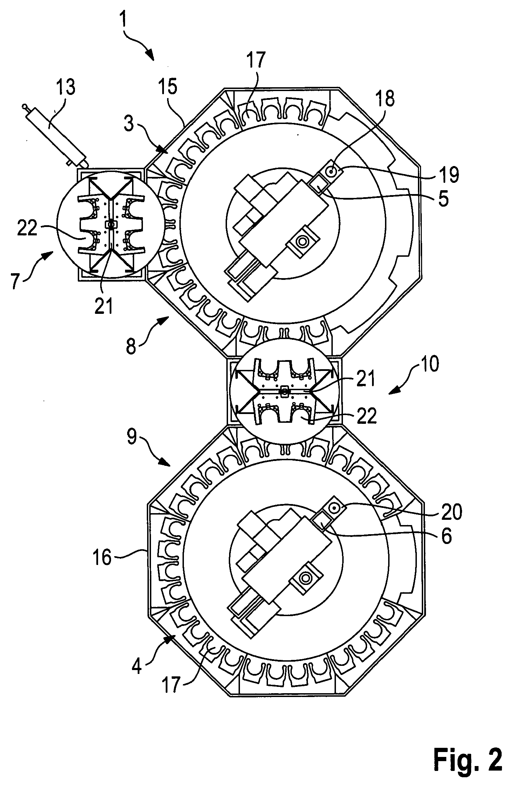

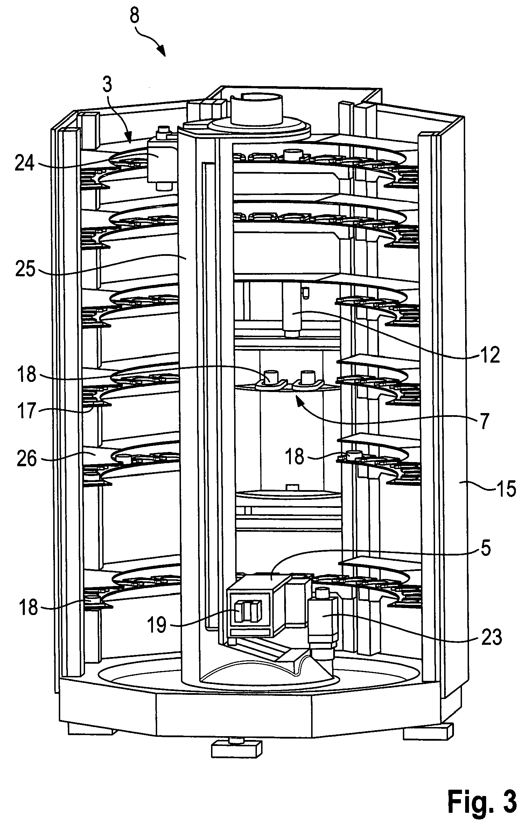

In den Figuren 2 und 3 sind weitere Einzelheiten der Speichereinheiten 8, 9 zu erkennen.

Die kreisringförmigen Werkzeugmagazinregale 3, 4 sind mit einer Vielzahl von übereinander und kreisringförmig angeordneten, nicht beweglichen Werkzeugablageplätzen 17 für die Bearbeitungswerkzeuge 18 versehen.

In dem freien kreisringförmigen Zwischenraum ist in jedem Werkzeugmagazinregal 3, 4 die Werkzeughandhabungseinrichtung 5, 6 angeordnet, die um eine vertikale Drehachse motorisch bewegbar ist.

An jeder Werkzeughandhabungseinrichtung 5, 6 ist ein horizontal und vertikal motorisch verfahrbarer Werkzeuggreifer 19, 20 für die Aufnahme und Abgabe der Bearbeitungswerkzeuge 18 angeordnet.

Die zwischen den Speichereinheiten 8, 9 angeordnete Übergabestation 10 weist eine um eine vertikale Drehachse motorisch drehbare Werkzeugschleuse 21 mit einseitig oder beidseitig angeordneten, nicht beweglichen Werkzeugablageplätzen 22 auf, die durch die Drehbewegung die in der Werkzeugschleuse 21 befindlichen Bearbeitungswerkzeuge 18 aus dem Innenraum einer Speichereinheit 8, 9 in den Innenraum der anderen damit verbundenen Speichereinheit 8, 9 einschleusen kann.

Die Werkzeugschleuse 21 kann in identischer Bauweise zusätzlich auch an mindestens einer der Speichereinheiten 8, 9 als Be- und Entladestation 7 zur manuellen Be- und Entladung von Bearbeitungswerkzeugen 18 angebracht werden (Figur 2).

An jeder Werkzeughandhabungseinrichtung 5, 6 ist ein Antriebsmotor 23 für die Drehachse und ein Antriebsmotor 24 für die Vertikalachse gelagert, um die horizontal und vertikal motorisch verfahrbaren Werkzeuggreifer 19, 20 entlang eines Spindelturms 25 zu verfahren.

Unterhalb der einzelnen kreisringförmig angeordneten Werkzeugablageplätze 17 sowie unterhalb der Übergabestation 10 ist jeweils ein Tropfblech 26 bzw. 28 angebracht. Außerdem sind die Werkzeugablageplätze 22 mit einer Indexierung 27 versehen.

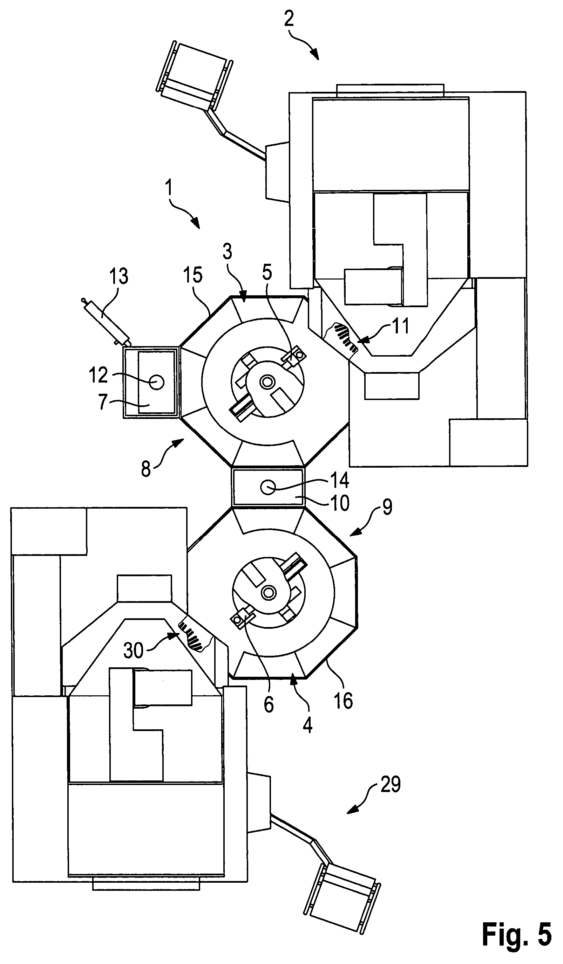

Figur 5 zeigt die Verwendung der erfindungsgemäßen Werkzeugspeicheranordnung 1 im Zusammenhang mit zwei Bearbeitungszentren 2, 29. Dabei ist auch in dem zweiten Bearbeitungszentrum 29 zwischen den beiden Seitenwandungen des Maschinengestells ein bewegbarer Pick-Up-Werkzeugmagazinspeicher 30 für einen Werkzeugwechsel im Pick-Up-Verfahren gelagert. Während bei der Anordnung nach Figur 1 die beiden Speichereinheiten 8, 9 nur ein Bearbeitungszentrum 2 bedienen, ist bei der Anordnung nach Figur 5 die zweite Speichereinheit 9 mit dem Bearbeitungszentrun 29 verbunden. Auf diese Weise können die miteinander verketteten Speichereinheiten 8, 9 die Funktion einer zentralen Werkzeugspeicheranordnung 1 ausüben und die Speicherkapazität mehrerer Bearbeitungszentren 2, 29 erweitern, indem mehrere der funktional verketteten Speichereinheiten 8, 9 die Bearbeitungswerkzeuge 18 mit jeweils einem Bearbeitungszentrum 2, 29 austauschen.

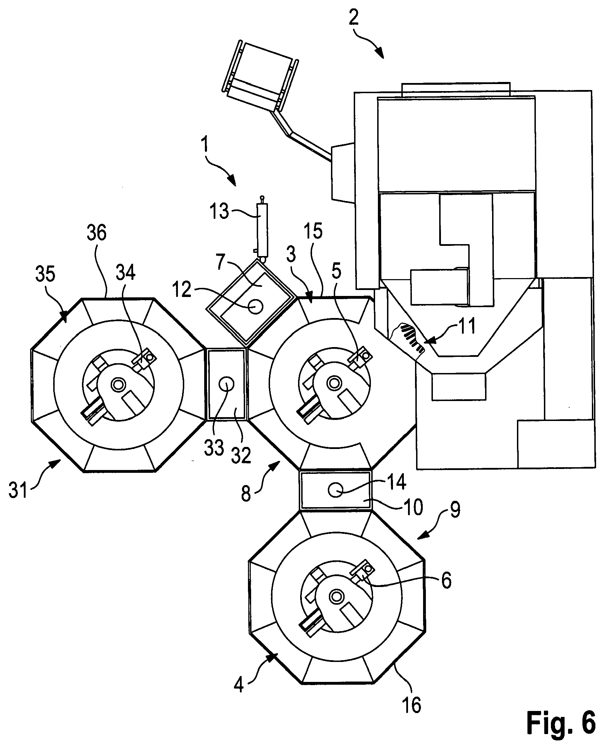

Figur 6 zeigt eine Anordnung bei der drei Speichereinheiten 8, 9, 31 mit einem Bearbeitungszentrum 2 verbunden sind. Um auch auf die Speichereinheit 31 zugreifen zu können, ist zwischen der Speichereinheit 8 und der Speichereinheit 31 eine Übergabestation 32 mit einem Antriebsmotor 33 vorgesehen, die in gleicher Weise ausgebildet ist, wie die Übergabestation 10.

Des Weiteren sind auch in der Speichereinheit 31, die wie die Speichereinheiten 8 bzw. 9 aufgebaut ist, eine Werkzeughandhabungseinrichtung 34, ein Werkzeugmagazinregal 35 und eine Schutzumhausung 36 vorhanden.

### Bezugszeichenliste

- 1: Werkzeugspeicheranordnung
- 2: Bearbeitungszentrum
- 3: Werkzeugmagazinregal
- 4: Werkzeugmagazinregal
- 5: Werkzeughandhabungseinrichtung
- 6: Werkzeughandhabungseinrichtung
- 7: Be- und Entladestation
- 8: Speichereinheit
- 9: Speichereinheit
- 10: Übergabestation
- 11: Pick-Up-Werkzeugmagazinspeicher
- 12: Antriebsmotor Be- und Entladestation
- 13: Bedienfeld
- 14: Antriebsmotor Übergabestation
- 15: Schutzumhausung
- 16: Schutzumhausung
- 17: Werkzeugablageplätze
- 18: Bearbeitungswerkzeuge
- 19: Werkzeuggreifer
- 20: Werkzeuggreifer
- 21: Werkzeugschleuse
- 22: Werkzeugablageplätze
- 23: Antriebsmotor Drehachse
- 24: Antriebsmotor Vertikalachse
- 25: Spindelturm
- 26: Tropfblech
- 27: Indexierung
- 28: Tropfblech
- 29: Bearbeitungszentrum
- 30: Pick-Up-Werkzeugmagazinspeicher
- 31: Speichereinheit
- 32: Übergabestation
- 33: Antriebsmotor Übergabestation
- 34: Werkzeughandhabungseinrichtung
- 35: Werkzeugmagazinregal
- 36: Schutzumhausung

## Patentansprüche

1. Werkzeugspeicheranordnung (1) zur Erweiterung der Werkzeugspeicherkapazität eines vertikalen oder eines horizontalen Fräs-, Bohr und/oder Dreh-Bearbeitungszentrums (2), bestehend aus mehreren separaten, funktional miteinander verketteten Speichereinheiten (8, 9, 31), in denen sich jeweils eine eigene kraftbetriebene Werkzeughandhabungseinrichtung (5, 6, 34) befindet und in denen mindestens ein Werkzeugmagazinregal (3, 4, 35) mit einer Vielzahl von nicht beweglichen Werkzeugablageplätzen (17) zur Speicherung von Bearbeitungswerkzeugen (18) untergebracht ist, **dadurch gekennzeichnet, dass** die separaten Speichereinheiten (8, 9, 31) durch eine Übergabestation (10, 32), die sich im Zwischenraum der Speichereinheiten (8, 9, 31) befindet, räumlich miteinander verbindbar sind, so dass eine Durchgangsmöglichkeit von dem Innenraum der einen Speichereinheit (8, 9, 31) in den Innenraum der damit verbundenen anderen Speichereinheit (8, 9, 31) entsteht, und dass mittels dieser Übergabestation (10, 32) ein automatischer Austausch der Bearbeitungswerkzeuge (18) zwischen den Speichereinheiten (8, 9, 31) durchführbar ist.

2. Werkzeugspeicheranordnung nach Anspruch 1, **dadurch gekennzeichnet, dass** die räumlich miteinander verbundenen Speichereinheiten (8, 9, 31) gleichartig aufgebaut sind.

3. Werkzeugspeicheranordnung nach einem der vorhergehenden Ansprüche, **dadurch gekennzeichnet, dass** die Speichereinheiten (8, 9, 31) kreisringförmige Werkzeugmagazinregale (3, 4, 35) mit einer Vielzahl von übereinander und kreisringförmig angeordneten, nicht beweglichen Werkzeugablageplätze (17) beinhalten.

4. Werkzeugspeicheranordnung nach Anspruch 3, **dadurch gekennzeichnet, dass** in jedem Werkzeugmagazinregal (3, 4, 35) eine im freien kreisringförmigen Zwischenraum um eine vertikale Drehachse motorisch bewegbare Werkzeughandhabungseinrichtung (5, 6, 34) angeordnet ist.

5. Werkzeugspeicheranordnung nach Anspruch 4, **dadurch gekennzeichnet, dass** an jeder Werkzeughandhabungseinrichtung (5, 6, 34) ein horizontal und vertikal motorisch verfahrbarer Werkzeuggreifer (19, 20) für die Aufnahme und Abgabe der Bearbeitungswerkzeuge (18) angeordnet ist.

6. Werkzeugspeicheranordnung nach einem der vorhergehenden Ansprüche, **dadurch gekennzeichnet, dass** die Übergabestation (10, 32) modular an verschiedenen Stellen der Speichereinheiten (8, 9, 31) anbringbar ist, damit die räumliche Anordnung der funktional miteinander verketten Speichereinheiten (8, 9, 31) an die Platzverhältnisse beim Anlagenbetreiber anpassbar ist.

7. Werkzeugspeicheranordnung nach einem der vorhergehenden Ansprüche, **dadurch gekennzeichnet,**
**dass** die Übergabestation (10, 32) eine eigene kraftbetriebene Vorrichtung enthält, dass die kraftbetriebene Vorrichtung eine um eine vertikale Drehachse motorisch drehbare Werkzeugschleuse (21) mit einseitig oder beidseitig angeordneten, nicht beweglichen Werkzeugablageplätzen (22) ist, die durch die Drehbewegung die in der Werkzeugschleuse (21) befindlichen Bearbeitungswerkzeuge aus dem Innenraum einer Speichereinheit (8, 9, 31) in den Innenraum der anderen damit verbundenen Speichereinheit (8, 9, 31) einschleust, und
**dass** die kraftbetriebene Vorrichtung die Bearbeitungswerkzeuge (18) in der Übergabestation (10, 32) von einer Speichereinheit (8, 9, 31) an die andere Speichereinheit (8, 9, 31) derart übergibt, dass die Bearbeitungswerkzeuge (18) sofort durch die Werkzeughandhabungseinrichtung (5, 6, 34) weiter transportiert werden können und nicht zuerst in ihrer winkelgemäßen bzw. radialen Orientierung gedreht werden müssen.

8. Werkzeugspeicheranordnung nach Anspruch 7, **dadurch gekennzeichnet, dass** die Werkzeugschleuse (21) in identischer Bauweise zusätzlich an mindestens einer der Speichereinheiten (8, 9, 31) als Be- und Entladestation (7) zur manuellen Be- und Entladung von Bearbeitungswerkzeugen (18) anbringbar ist.

9. Werkzeugspeicheranordnung nach Anspruch 8, **dadurch gekennzeichnet, dass** eine oder mehrere Be- und Entladestationen (7) modular an verschiedenen Stellen der Speichereinheiten (8, 9, 31) anbringbar sind, damit die räumliche Anordnung der Beund Entladestationen (7) an die Platzverhältnisse beim Anlagenbetreiber angepasst werden kann.

10. Werkzeugspeicheranordnung nach einem der vorhergehenden Ansprüche, **dadurch gekennzeichnet, dass** die miteinander verketteten Speichereinheiten (8, 9, 31) die Funktion einer zentralen Werkzeugspeicheranordnung (1) haben, um die Speicherkapazität mehrerer Bearbeitungszentren (2, 29) zu erweitern, indem mehrere der funktional verketteten Speichereinheiten (8, 9, 31) dazu ausgebildet sind, die Bearbeitungswerkzeuge (18) mit jeweils einem Bearbeitungszentrum (2, 29) auszutauschen.

## Claims

1. Tool storage arrangement (1) for extending the tool storage capacity of a vertical or horizontal milling, drilling and/or turning center (2), consisting of a plurality of separate storage units (8, 9, 31) functionally linked to each other, the interior space of which contains an individual force-driven tool handling device (5, 6, 34), respectively, and in which a tool magazine store (3, 4, 35) including a variety of non-movable tool storage compartments (17) for storing of machining tools (18) is at least arranged, **characterized in**
- **that** the separate storage units (8, 9, 31) are spatially connectable to each other via a delivery station (10, 32) that is located in an interspace of the storage units (8, 9, 31), so that a passage way occurs from the interior space of one storage unit (8, 9, 31) to the interior space of the other storage unit (8, 9, 31) connected therewith, and
- **that** an automatic exchange of the machining tools (18) is operable between the storage units (8, 9, 31) via said delivery station (10, 32).

2. Tool storage arrangement according to claim 1, **characterized in that** the storage units (8, 9, 31) spatially linked to each other are constructed identically.

3. Tool storage arrangement according to one of the preceding claims **characterized in that** the storage units (8, 9, 31) include circular tool magazine stores (3, 4, 35) with a variety of non-movable tool storage compartments (17) arranged one above the other and circularly.

4. Tool storage arrangement according to claim 3, **characterized in that** a tool handling device (5, 6, 34) that is motor-driven around a vertical rotation axis in a free-circular interspace is arranged in each tool magazine store (3, 4, 35).

5. Tool storage arrangement according to claim 4, **characterized in that** a horizontally and vertically motor-operated movable tool gripper (19, 20) attached to each tool handling device (5, 6, 34) is arranged for receiving and delivering of the machining tools (18).

6. Tool storage arrangement according to one of the preceding claims, **characterized in that** the delivery station (10, 32) is attachable in a modular way at different places of the storage units (8, 9, 31), so that the spatial arrangement of the storage units (8, 9, 31) functionally linked to each other is adaptable to the spatial conditions of the plant operator.

7. Tool storage arrangement according to one of the preceding claims, **characterized in**
- **that** the delivery station (10, 32) contains an individual force-driven device,
- **that** the force-driven device is a tool sluice (21) rotatable by motor around a vertical rotation axis with non-movable tool storage compartments (22) arranged single-sided and double-sided, which feeds the machining tools located in the tool sluice (21) from the interior space of one storage unit (8, 9, 31) to the interior space of the other storage unit (8, 9, 31) connected therewith by a rotary motion, and
- **that** the force-driven device delivers the machining tools in the delivery station (10, 32) from one storage unit (8, 9, 31) to the other storage unit (8, 9, 31) in such a way that the machining tools (18) can be transported immediately by the tool handling device (5, 6, 34) and must not first be rotated in its angularly and radial orientation, respectively.

8. Tool storage arrangement according to claim 7, **characterized in that** the tool sluice (21) is additionally attachable in an identical construction to at least one of the storage units (8, 9, 31) as a loading and unloading station (7) for manually loading and unloading of machining tools (18).

9. Tool storage arrangement according to claim 8, **characterized in that** one or more loading and unloading stations (7) are attachable in a modular way at different places of the storage units (8, 9, 31), so that the spatial arrangement of the loading and unloading stations (7) can be adapted to the spatial conditions of the plant operator.

10. Tool storage arrangement according to one of the preceding claims, **characterized in that** the storage units (8, 9, 31) linked to each other having the function of a central tool storage arrangement (1), in order to extend the storage capacity of a plurality of machining centers (2, 29), while a plurality of the storage units (8, 9, 31) functionally linked are formed thereto, to exchange the machining tools (18) with one respective machining center (2, 29).

## Revendications

1. Ensemble de stockage d'outils (1) servant à élargir la capacité de stockage d'outils d'un centre vertical ou horizontal de fraisage, de perçage et/ou d'usinage par tournage (2), constitué de plusieurs unités de stockage (8, 9, 31) séparées, enchaînées les unes aux autres de manière fonctionnelle, dans lesquelles se trouve un dispositif de manutention d'outil (5, 6, 34) spécifique fonctionnant avec une source d'énergie et dans lesquelles est abrité au moins un rayonnage de magasin d'outils (3, 4, 35) pourvu d'une pluralité d'emplacements de réception d'outil (17) non mobiles servant à stocker des outils d'usinage (18), **caractérisé en ce que** les unités de stockage (8, 9, 31) séparées peuvent être reliées les unes aux autres de manière spatiale par une station de transfert (10, 32), qui se trouve dans l'espace intermédiaire des unités de stockage (8, 9, 31) de sorte qu'un passage de l'espace intérieur de l'une des unités de stockage (8, 9, 31) dans l'espace intérieur de l'autre unité de stockage (8, 9, 31) reliée à cette dernière est rendu possible, et **en ce qu'**un échange automatique des outils d'usinage (18) entre les unités de stockage (8, 9, 31) peut être mis en oeuvre au moyen de ladite station de transfert (10, 32).

2. Ensemble de stockage d'outils selon la revendication 1, **caractérisé en ce que** les unités de stockage (8, 9, 31) reliées de manière spatiale les unes aux autres présentent une structure de type identique.

3. Ensemble de stockage d'outils selon l'une quelconque des revendications précédentes, **caractérisé en ce que** les unités de stockage (8, 9, 31) comportent des rayonnages de magasin d'outils (3, 4, 35) de forme circulaire pourvus d'une pluralité d'emplacements de réception d'outil (17) non mobiles disposés les uns au-dessus des autres et de manière à présenter une forme circulaire.

4. Ensemble de stockage d'outils selon la revendication 3, **caractérisé en ce qu'**un dispositif de manutention d'outils (5, 6, 34) pouvant être déplacé de manière motorisée autour d'un axe de rotation vertical dans l'espace intermédiaire libre de forme circulaire est disposé dans chaque rayonnage de magasin d'outils (3, 4, 35).

5. Ensemble de stockage d'outils selon la revendication 4, **caractérisé en ce qu'**un système de préhension d'outil (19, 20) pouvant effectuer un déplacement motorisé horizontal et vertical pour le logement et la réception des outils d'usinage (18) est disposé au niveau de chaque dispositif de manutention d'outil (5, 6, 34).

6. Ensemble de stockage d'outils selon l'une quelconque des revendications précédentes, **caractérisé en ce que** la station de transfert (10, 32) peut être installée de manière modulaire en divers endroits des unités de stockage (8, 9, 31) afin que l'agencement spatial des unités de stockage (8, 9, 31) enchaînées les unes aux autres de manière fonctionnelle puisse être adapté aux conditions en matière de place chez l'opérateur de l'installation.

7. Ensemble de stockage d'outils selon l'une quelconque des revendications précédentes, **caractérisé en ce**
**que** la station de transfert (10, 32) contient un dispositif spécifique fonctionnant par une source d'énergie,
**que** le dispositif fonctionnant avec une source d'énergie est un sas à outils (21) pouvant tourner de manière motorisée autour d'un axe de rotation vertical, pourvu d'emplacements de réception d'outil (22) non mobiles, disposés d'un côté ou des deux côtés, lequel introduit par le mouvement de rotation les outils d'usinage se trouvant dans le sas à outils (21), provenant de l'espace intérieur d'une unité de stockage (8, 9, 31) dans l'espace intérieur de l'autre unité de stockage (8, 9, 31) reliée à cette dernière, et
**que** le dispositif fonctionnant avec une source d'énergie transfère les outils d'usinage (18) situés dans la station de transfert (10, 32) d'une unité de stockage (8, 9, 31) à l'autre unité de stockage (8, 9, 31) de telle manière que les outils d'usinage (18) peuvent être transportés immédiatement par le dispositif de manutention d'outils (5, 6, 34) et ne doivent pas en premier lieu être tournés selon leur orientation angulaire ou radiale.

8. Ensemble de stockage d'outils selon la revendication 7, **caractérisé en ce que** le sas à outils (21) peut être installé, selon une construction identique, en plus au niveau au moins d'une des unités de stockage (8, 9, 31) en tant que station de chargement et de déchargement (7) afin de charger et de décharger manuellement des outils d'usinage (18).

9. Ensemble de stockage d'outils selon la revendication 8, **caractérisé en ce qu'**une ou plusieurs stations de chargement et de déchargement (7) peuvent être installées de manière modulaire en divers endroits des unités de stockage (8, 9, 31) afin que l'agencement spatial des stations de chargement et de déchargement (7) puisse être adapté aux conditions en matière de place chez l'opérateur de l'installation.

10. Ensemble de stockage d'outils selon l'une quelconque des revendications précédentes, **caractérisé en ce que** les unités de stockage (8, 9, 31) enchaînées les unes aux autres ont la fonction d'un ensemble de stockage d'outils (1) central afin d'élargir la capacité de stockage de plusieurs centres d'usinage (2, 29) **en ce que** plusieurs unités de stockage (8, 9, 31) enchaînées de manière fonctionnelle sont réalisées afin d'échanger les outils d'usinage (18) par respectivement un centre d'usinage (2, 29).
